(19) Europäisches Patentamt
European Patent Office
Office européen des brevets

(11) **EP 0 826 952 B1**

(12) **EUROPÄISCHE PATENTSCHRIFT**

(45) Veröffentlichungstag und Bekanntmachung des Hinweises auf die Patenterteilung:
**28.01.2004 Patentblatt 2004/05**

(51) Int Cl.7: **G01L 5/04**

(21) Anmeldenummer: **97109545.0**

(22) Anmeldetag: **12.06.1997**

(54) **Messung der Fadenzugkraft bei Fadenführungseinrichtung**

Measurement of yarn tensile force in yarn guiding device

Mesure de la force de tension des fils dans les dispositifs de guidage des fils

(84) Benannte Vertragsstaaten:
**BE CH DE ES FR GB GR IT LI**

(30) Priorität: **03.09.1996 DE 19635695**

(43) Veröffentlichungstag der Anmeldung:
**04.03.1998 Patentblatt 1998/10**

(73) Patentinhaber: **Saurer GmbH & Co. KG**
**41069 Mönchengladbach (DE)**

(72) Erfinder: **Sturm, Christian**
**47798 Krefeld (DE)**

(56) Entgegenhaltungen:
| | |
|---|---|
| EP-A- 0 246 332 | DE-A- 2 917 218 |
| DE-A- 3 718 924 | DE-A- 4 030 892 |
| DE-A- 4 300 633 | DE-U- 8 900 167 |
| US-A- 4 162 968 | US-A- 5 531 063 |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zum Messen der Fadenzugkraft eines laufenden Fadens gemäß dem Oberbegriff des Anspruches 1.

Derartige Vorrichtungen sind in verschiedenen Ausführungsformen bekannt.

In der Textilindustrie besteht bei vielen Arbeitsvorgängen, beispielsweise während des Umspulens eines Spinnkopfes auf eine großvolumige Kreuzspule, die Forderung, die Fadenzugkraft annähernd konstant zu halten.

Im Zusammenhang mit Kreuzspulautomaten sind daher in der Vergangenheit bereits verschiedene Vorschläge gemacht und Vorrichtungen hergestellt worden, um die Fadenzugkraft während des Kopsabzuges laufend zu regeln, Änderungen zu kompensieren und vorbestimmte Fadenzugkraftwerte einzuhalten. Hierzu sind verschiedene Regelprinzipien bekannt, welche je nach den Anforderungen unabhängig voneinander oder auch in Kombination miteinander angewendet werden können.

Ein Prinzip betrifft eine Drehzahlregelung der Auflaufspule, um die Fadenspannung durch Angleichung des Fadenzuges während des Arbeitsvorganges konstant zu halten.

Bei einem anderen Prinzip der Fadenzugkraftregelung gelangte z. B. ein Tellerbremssystem zur Anwendung, das den Faden auf seinem Weg zur Auflaufspule die gewünschte Spannung dadurch verleiht, daß der Faden beim Durchlaufen der Bremsteller mehr oder weniger gebremst und dadurch mit der vorbeschriebenen Zugkraft gespannt wird.

Die Wirkungsweise beider Regelsysteme besteht darin, die den Fadenzug bestimmenden Größen in Abhängigkeit vom Fadenzug selbständig zu regeln und jede gegenüber einer gewählten Normalfadenspannung zeitweise auftretende Fadenspannungsdifferenz automatisch auszugleichen. Das heißt, eine Abtastung und damit Messung oder Kontrolle der momentan herrschenden Fadenzugkraft ist Voraussetzung für alle Regelvorgänge dieser Systeme. Hierbei ist die Gesamtfunktion und vor allem die Präzision der Regelanlage zur Konstanthaltung der Fadenzugkraft nicht zuletzt davon abhängig, wie genau und mit welcher Trägheit man die laufende Fadenzugkraftkontrolle oder -messung durchzuführen vermag.

Zur Messung der Fadenzugkraft an einem laufenden Faden wird meistens ein Dreipunktverfahren angewendet, bei dem die Kraft des Fadens auf eine den Faden umlenkende Meßöse bestimmt wird. Um aus dieser Kraft auf die Fadenzugkraft schließen zu können, muß der Umschlingungswinkel des Fadens an der Meßöse bekannt sein. Damit dieser Umschlingungswinkel genau eingehalten wird, liegt der Faden außer an der Meßöse an zwei weiteren, zur Fadenführungseinrichtung des Fadenzugkraftsensors gehörenden Fadenführungselementen an. Es ist in diesem Zusammenhang bekannt, daß die Meßöse bei dynamisch arbeitenden Sensoren möglichst leicht sein sollte, um eine hohe Grenzfrequenz des Sensors zu erhalten.

Durch die DE 35 06 698 A1 ist beispielsweise eine Vorrichtung bekannt, die ein kompaktes Gehäuse aufweist, an dessen Fadenein- und -auslauf ortsfest Fadenführer in Form von Laufröllchen angeordnet sind. In einem bestimmten Winkel und Abstand zu diesen Fadenführern ist auf einem einseitig eingespannten Federblech ein Diabolo, welcher einen niedrigen Reibungskoeffizienten aufweist, angebracht. Das endseitig eingespannte Federblech kann so unter der Wirkung der Zugkraft des Fadens ausweichen. Unterhalb des Diabolos ist, ebenfalls an einem beweglichen Federblech, ein Permanentmagnet befestigt, der jeder Bewegung folgt, die durch die Änderung der Fadenzugkraft hervorgerufen wird. Auf der Höhe des Permanentmagneten ist stationär an dem Gehäuse in einem bestimmten Abstand zum Magneten eine Hallsonde befestigt. Jede Bewegung des Magneten wird über die Hallsonde, welche über eine elektrische Leitung an eine Steuereinrichtung angeschlossen ist, registriert. Die gewünschte Fadenzugkraft wird in die Steuereinrichtung eingegeben. Bei zu hoher bzw. zu niedriger Fadenzugkraft gibt die Steuereinrichtung ein Signal, welches z. B. zu einem Ausregeln der Fadenzugkraft an der betreffenden Spulstelle führt.

Die DE 40 25 005 A1 beschreibt eine Vorrichtung, bei der zum Messen der Fadenzugkraft ein Halbleiter-Dünnfilm-Drucksensor Verwendung findet.

Dieser IC-Baustein ist dabei innerhalb eines Schutzgehäuses angeordnet und wird über ein mechnisches Hebelelement, das mit dem laufenden Faden in Kontakt steht, druckbeaufschlagt. Das Hebelelement besitzt endseitig eine Meßöse, in der der Faden gleitet. Außerdem sind, wie üblich, im Abstand vor und hinter der beweglichen Meßöse stationäre Fadenführer angeordnet.

Sowohl die Sensoreinrichtungen gemäß DE 40 25 005 A1 als auch die Sensoreinrichtung gemäß DE 35 06 698 A1 weisen den Nachteil auf, daß die Fadenführungseinrichtung des Fadenzugkraftsensors sehr empfindlich gegen Fadenzugkraftänderungen, insbesondere gegen abrupte Fadenspannungsverluste ist. Bei solchen abrupten Fadenspannungsverlusten besteht die Gefahr, daß der Faden aus der beweglichen, relativ kleinen und, um ein Einlegen des Fadens zu ermöglichen, offenen Meßöse bzw. dem Diabolo herausgleitet, was zu einem völligen Funktionsverlust der Einrichtung führt, der nur durch einen manuellen Eingriff behoben werden kann.

Ausgehend vom vorstehenden Stand der Technik liegt der Erfindung die Aufgabe zugrunde, die bekannten Einrichtungen weiter zu verbessern.

Diese Aufgabe wird erfindungsgemäß durch eine Vorrichtung gelöst, wie sie im Anspruch 1 beschrieben ist.

Vorteilhafte Ausgestaltungen der Erfindung sind Gegenstand der Unteransprüche.

Die im Anspruch 1 dargelegte Ausführungsform einer Fadenführungseinrichtung mit zwei stationären, jeweils eine V-förmige Fadenführungsnut aufweisenden Fadenführungselementen und einem beweglichen Meßglied, dessen Fadenanlaufkörper eine konvex ausgebildete Fadenleitkontur besitzt, hat den Vorteil, daß der Faden während des "normalen" Umspulprozesses stets eine definierte Soll-Lage einnimmt, die, in Vorderansicht der Spulstelle, der kürzesten möglichen Wegstrecke zwischen den Fadenführungselementen entspricht. In diese Soll-Lage gleitet der Faden auch nach einem abrupten Fadenspannungsverlust, der in der Regel zu einer Verlängerung des Fadenweges und damit zu einer Auslenkung oder Aufkringelung des Fadens führt, automatisch zurück, wenn sich die Fadenspannung normalisiert. Irgendwelche manuellen Eingriffe oder zusätzliche Führungseinrichtungen sind dabei nicht notwendig.

Ein weiterer vorteil der erfindungsgemäßen Vorrichtung ist darin zu sehen, daß der Faden einfach und sicher in die Fadenführungseinrichtung des Fadenzugkraftsensors eingelegt werden kann.

In vorteilhafter Ausgestaltung ist die Dimensionierung des Fadenanlaufkörpers des Meßgliedes und damit die Breite der Fadenleitkontur, wie im Anspruch 2 ausgeführt, auf den Abstand des Meßgliedes von den stationären Fadenführungselementen sowie auf den Umschlingungswinkel des Fadens am Fadenanlaufkörper des Meßgliedes abgestimmt. Insbesondere bei der Verwirklichung der im Anspruch 3 beschriebenen Bedingungen für die Anordnungen und Abmessungen der Fadenleitkontur des Fadenanlaufkörpers ergibt sich eine Fadenführung, bei der der Faden einerseits in seiner Soll-Lage automatisch in einem energetischen Optimum läuft und andererseits auftretende Störungen selbsttätig korrigiert werden. Außerdem ist sichergestellt, daß der Faden auch bei unruhigem Fadenlauf stets auf dem Meßglied verbleibt.

Die im Anspruch 4 beschriebene bevorzugte Ausführungsform der Fadenleitkontur gewährleistet während des Umspulprozesses eine stabile Anlage des laufenden Fadens an der Fadenleitkontur sowie eine konstante Umschlingung des Fadenanlaufkörpers des Meßgliedes durch den Faden.

Vorzugsweise geht die in ihrem mittleren Bereich geradlinige Fadenleitkontur beidseitig in konvex gewölbt ausgebildete Randbereiche über (Anspruch 5). Eine solche Ausbildung verhindert, daß der Faden während des Zurückgleitens in seine Soll-Lage in einem lokalen Minimum verharrt. Durch eine solche Ausführungsform ist außerdem gewährleistet, daß sich keine Schmutzecken ergeben können, die sich in kurzer Zeit mit Fasern füllen. Derartige Faseransammlungen führen zu einer Verfälschung der Messung.

In weiterer Ausgestaltung der Erfindung besitzt das Meßglied, wie im Anspruch 6 dargelegt, eine nach hinten offene Aufnahme. In dieser Aufnahme ist beispielsweise die Tauchspule eines elektromagnetischen Fadenzugkraftsensors festgelegt. Die genaue Ausbildung und Funktionsweise eines derartigen Fadenzugkraftsensors ist bekannt und in der DE 41 29 803 A1 ausführlich beschrieben.

Die in den Ansprüchen 7-9 beschriebenen Merkmale der stationären Fadenführungselemente führen zu einer definierten und schonenden Fadenbehandlung im Bereich der Fadenführungselemente.

Durch einen bezüglich der X-Koordinate geradlinigen Nutgrund (Anspruch 7) wird beispielsweise vermieden, daß im Fadenlaufweg vor- oder nachgeschaltete, nicht genau fluchtende Fadenleiteinrichtungen den Faden vom Nutgrund der stationären Fadenleitelemente abheben, was das Meßergebnis verfälschen würde.

Die im Anspruch 8 beschriebene konvexe Krümmung des Nutgrundes in Fadenlaufrichtung ergibt einen schonenden Fadenanlauf, was sich positiv auf die Qualität des Fadens auswirkt.

Eine Ausbildung, wie sie im Anspruch 9 dargelegt ist, bietet Vorteile, wenn vor oder hinter dem Fadenzugkraftsensor eine weitere Sensoreinrichtung mit einem relativ schmalen Einfädelschlitz, z. B. ein Fadenreiniger oder dgl., angeordnet ist. Der abgewinkelte Schenkel der Fadenführungsnut erleichtert dabei das automatische Einfädeln des Fadens in diesen. Fadenreiniger, während der geradlinige Schenkel sicherstellt, daß der Faden zuverlässig in die stationären Fadenleitelemente der Fadenführungseinrichtung des Fadenzugkraftsensors eingelegt werden kann.

Weitere Einzelheiten der Erfindung sind einem nachfolgend anhand der Zeichnungen dargelegten Ausführungsbeispiel entnehmbar.

Es zeigt:

**Figur 1** in Vorderansicht eine an einer Spulstelle angeordnete Fadenführungseinrichtung eines Fadenzugkraftsensors,.

**Figur 2** die Vorrichtung gemäß Figur 1 in Seitenansicht,

**Figur 3** eine Draufsicht auf die Fadenführungseinrichtung, gemäß Schnitt III-III der Figur 1,

**Figur 4** den Anlaufkörper des beweglichen Meßgliedes des Fadenzugkraftsensors in Vorderansicht,

**Figur 5** den Anlaufkörper in Seitenansicht, gemäß Schnitt V-V der Figur 4,

**Figur 6** den Anlaufkörper in Draufsicht, gemäß Schnitt VI-VI der Figur 4,

**Figur 7** ein stationäres Fadenleitelement in Vorderansicht,

**Figur 8** das Fadenleitelement gemäß Schnitt VIII-VIII der Figur 7,

**Figur 9** eine Draufsicht auf das Fadenleitelement.

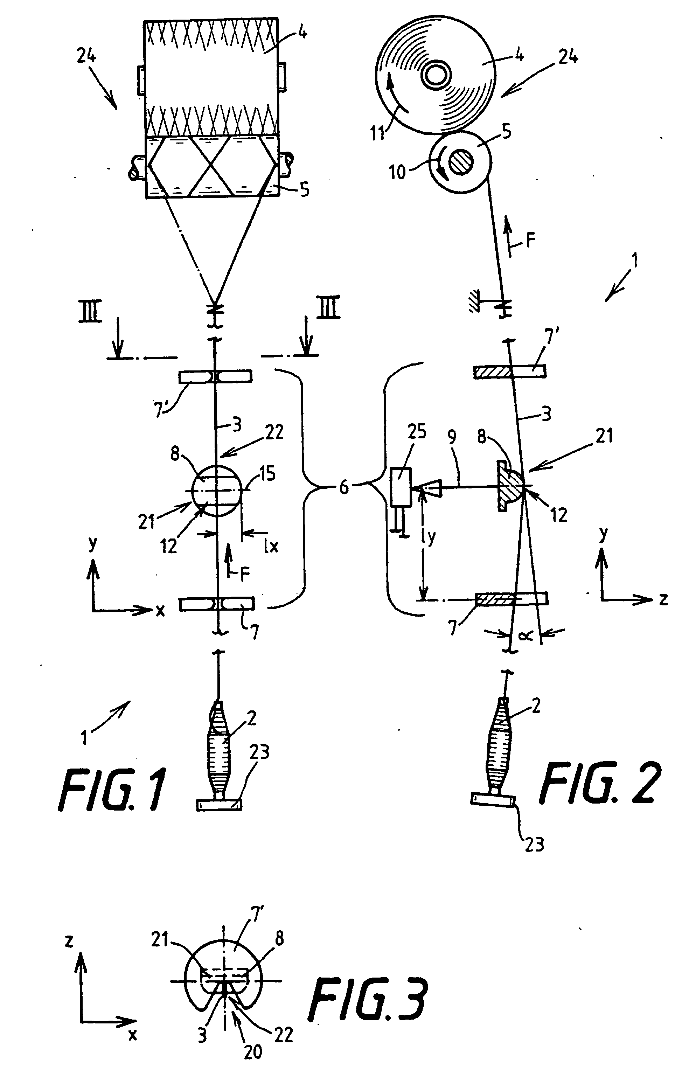

Die Figur 1 zeigt schematisch in Vorderansicht die Spulstelle 1 einer Kreuzspulen herstellenden Textilmaschine, vorzugsweise eines Kreuzspulautomaten.

Auf derartigen Spulstellen 1 wird, wie bekannt, von einem in einer Abspulstellung positionierten, auf einem Transportteller 23 stehenden Spinnkops 2 ein Faden 3 abgezogen und in einer Spuleinrichtung 24 zu einer großvolumigen Kreuzspule 4 umgespult.

Wie üblich, ist die Kreuzspule 4 während des Umspulprozesses in einem (nicht dargestellten) Spulenrahmen gehalten und wird auf ihrem Außenumfang durch eine in Richtung des Pfeiles 10 umlaufende, angetriebene Fadenführungstrommel 5 über Reibschluß in Richtung des Pfeiles 11 angetrieben.

Der Faden 3 durchläuft auf seinem Weg vom Spinnkops 2 zur Kreuzspule 4 verschiedene Kontrolleinrichtungen, die sowohl den Zustand des Fadens als auch den ordnungsgemäßen Ablauf Umspulprozeß überwachen. Eine dieser im Bereich des Fadenlaufweg 22 angeordneten Kontrolleinrichtungen ist beispielsweise der in Figur 2 schematisch angedeutete Fadenzugkraftsensor 25, dessen Fadenführungseinrichtung insgesamt mit 6 gekennzeichnet ist.

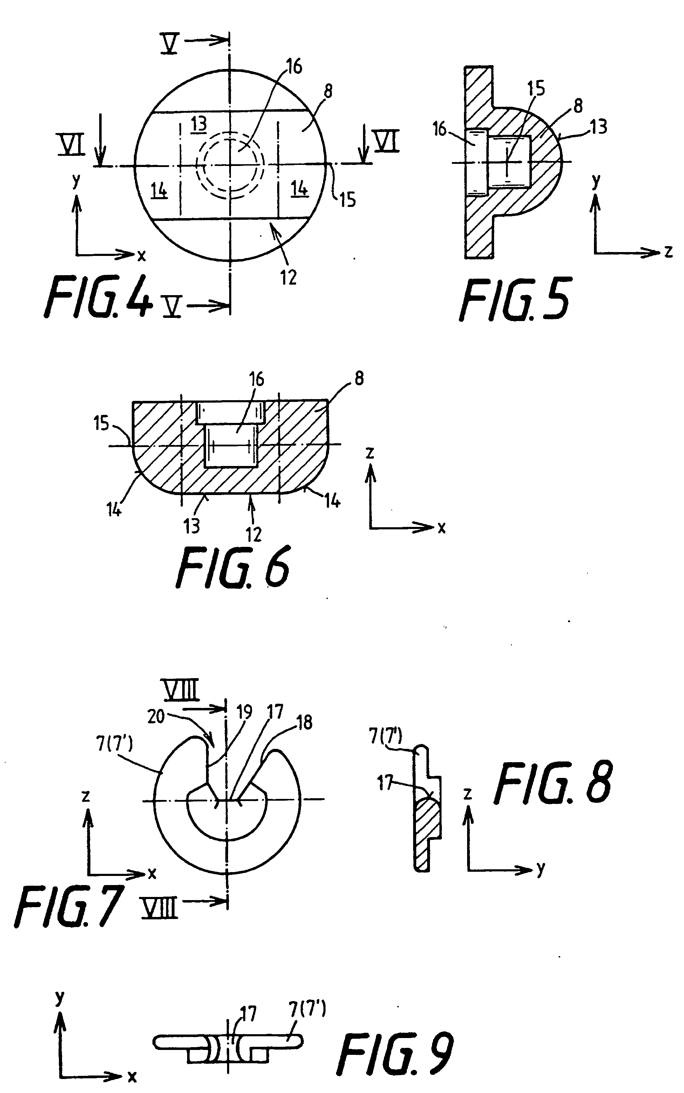

Die Fadenführungseinrichtung 6 besteht im einzelnen aus zwei stationären Fadenführungselementen 7, 7' sowie einem zwischen den Fadenführungselementen 7, 7' positionierten, beweglich gelagerten Meßglied 21. Von diesem Meßglied 21, das durch den laufenden Faden in Richtung des Pfeiles 9 beaufschlagt wird, ist in den Figuren 1-3 lediglich der Fadenanlaufkörper 8, der nachfolgend anhang der Figuren 4-6 näher erläutert wird, dargestellt.

Der Fadenanlaufkörper 8 besitzt, wie insbesondere aus den Figuren 4-6 ersichtlich, eine nach hinten offene Aufnahme 16, in der beispielsweise eine Tauchspule des schematisch angedeuteten Fadenzugkraftsensors 25 festgelegt ist.

Der Fadenanlaufkörper 8 besitzt außerdem eine Fadenleitkontur 12 mit einem Mittelbereich 13 sowie seitlich anschließenden Randbereichen 14. Der Mittelbereich 13 hat dabei die Form eines Halbzylinders, dessen Mittelachse 15 in Richtung der X-Koordinate verläuft. Das heißt, der Mittelbereich 13 ist in Richtung der X-Koordinate geradlinig ausgebildet. Die seitlich anschließenden Randbereiche 14 sind konvex gewölbt. Wie anhand der Figur 1 und 2 dargestellt, ist die Dimensionierung und die Anordnung des Fadenanlaufkörpers 8 bzw. der Fadenleitelemente 7, 7' so gewählt, daß die Bedingung erfüllt ist:

$$l_x \text{ (halbe Fadenleitkonturbreite)} > l_y \text{ (Abstand Fadenanlaufkörper}$$

/ Fadenleitelemente) x tan. $\alpha/2$ ($\alpha$ = Umschlingungswinkel des Fadens am Fadenanlaufkörper).

Die Fadenleitelemente 7, 7' sind in den Figuren 7-9 näher dargestellt.

Wie insbesondere anhand der Figur 7 ersichtlich, besitzen die Fadenleitelemente 7, 7' jeweils eine Fadenführungsnut 20 mit einem geradlinigen Schenkel 18 und einem abgewinkelten Schenkel 19 sowie einen bezüglich der X-Koordinate geradlinigen Nutgrund 17. In Fadenlaufrichtung F ist der relativ breite Nutgrund 17 konvex gewölbt ausgebildet.

Funkton der Einrichtung:

Der von einem Spinnkops 2 abgezogene Faden 3 durchläuft auf seinem Weg zur Spuleinrichtung 24 unter anderem die Fadenführungseinrichtung 6 des Fadenzugkraftsensors 24. Der Faden 3 läuft im Bereich dieser Fadenführungseinrichtung 6 in den V-förmigen Fadenführungsnuten 20 der stationären Fadenführungselemente 7 und 7' und beaufschlagt außerdem den Fadenanlaufkörper 8 des Meßgliedes 21 des Fadenzugkraftsensors 24.

Wie in den Figuren 1 und 3 dargestellt, umschlingt der sich in Fadenlaufrichtung F bewegende Faden 3, üblicherweise den bezüglich der X-Koordinate geradlinig ausgebildeten Mittelbereich 13 des Fadenanlaufkörpers 8 und läuft dort während des "normalen" Umspulbetriebes in einer stabilen Soll-Lage.

Wenn es aufgrund eines abrupten Fadenspannungsverlustes zu einer plötzlichen Verlängerung des Fadens zwischen den Fadenleitelementen 7, 7' kommt, gerät der Faden 3 üblicherweise zunächst außer Kontakt mit dem Meßglied 21 und kringelt sich oder legt sich beispielsweise seitlich neben die Fadenleitkontur 12 des Meßgliedes 21. Über die Regeleinrichtung wird dann, z.B. mittels einer Fadenbremse oder dgl. dahingehend entgegengesteuert, daß der Fadenspannungsverlust ausgeglichen wird. Der Faden 3 gleitet dabei aufgrund der Ausbildung und Anordnung der Fadenleiteinrichtung 6 automatisch in seine Soll-Lage auf dem Meßglied 21 zurück, so daß der Umspulprozeß ohne einen manuellen Eingriff fortgesetzt werden kann.

Die Erfindung ist nicht auf das dargestellte und beschriebene Ausführungsbeispiel beschränkt. Es können in Verbindung mit der beschriebenen Fadenführungseinrichtung durchaus auch andere Fadenzugkraftsensoren, als der in der DE 41 29 803 A1 beschriebene Fadenzugkraftsensor, z.B. mechanische Fadenzugkraftsensoren Verwendung finden, ohne daß damit der allgemeine Erfindungsgedanke, der in einer sicheren, sich bei Fadenspannungsverlust selbst korrigierenden Fadenführung, vorzugsweise im Bereich eines Fadenzugkraftsensors, liegt, verlassen wird.

**Patentansprüche**

1. Vorrichtung zum Messen der Fadenzugkraft eines laufenden Fadens, mit zwei stationären Fadenführungselementen und einem zwischen den Fadenführungselementen angeordneten, in den Fadenlaufweg ragenden, durch den Faden beaufschlagten Meßglied,
   **dadurch gekennzeichnet,**
   **daß** die stationären Fadenführungselemente (7, 7') jeweils eine im wesentlichen V-förmige Fadenführungsnut (20) aufweisen und das bewegliche Meßglied (21) einen Fadenanlaufkörper (8) mit einer im wesentlichen konvex ausgebildeten Fadenleitkontur (12) besitzt.

2. Vorrichtung nach Anspruch 1, **dadurch gekennzeichnet,**
   **daß** die halbe Breite ($l_x$) der Fadenleitkontur (12) auf den Abstand ($l_y$) des Meßgliedes (21) von den Fadenführungselementen (7, 7') sowie auf dem Umschlingungswinkel ($\alpha$) des Fadens (3) am Fadenanlaufkörper (8) des Meßgliedes (21) abgestimmt ist.

3. Vorrichtung nach Anspruch 2, **dadurch gekennzeichnet,**
   **daß** die halbe Breite ($l_x$) der Fadenleitkontur (12) die Bedingung: $l_x > l_y$ x tan $\alpha/2$ erfüllt.

4. Vorrichtung nach Anspruch 1, **dadurch gekennzeichnet,**
   **daß** die Fadenleitkontur (12) im Mittelbereich (13) eine halbzylindrische Form aufweist, wobei die Mittelachse (15) des Halbzylinders orthogonal zum Fadenlaufweg (22) angeordnet ist.

5. Vorrichtung nach Anspruch 4, **dadurch gekennzeichnet,**
   **daß** die im Mittelbereich (13) in Richtung der X-Koordinate geradlinige Fadenleitkontur (12) des Fadenanlaufkörpers (8) beidseitig in konvex gewölbte Randbereiche (14) übergeht.

6. Vorrichtung nach einem der vorherigen Ansprüche, **dadurch gekennzeichnet,**
   **daß** der Fadenanlaufkörper (8) des Meßgliedes (21) eine nach hinten offene Aufnahme (16) aufweist.

7. Vorrichtung nach Anspruch 1, **dadurch gekennzeichnet,**
   **daß** die Fadenführungselemente (7, 7') eine Fadenführungsnut (20) mit einem bezüglich der X-Koordinate geradlinigen Nutgrund (17) aufweisen.

8. Vorrichtung nach Anspruch 7, **dadurch gekennzeichnet,**
   **daß** der Nutgrund (17) der Fadenführungsnut (20) in Fadenlaufrichtung (F) konvex gekrümmt ist.

9. Vorrichtung nach Anspruch 7, **dadurch gekennzeichnet,**
   **daß** die Fadenführungsnut (20) der Fadenführungselemente (7, 7') einen geradlinigen Schenkel (18) sowie einen abgewinkelten Schenkel (19) aufweist.

**Claims**

1. A device for measuring the yarn tensile strength of a running yarn, having two stationary yarn guide elements and a measuring unit which is disposed between the yarn guide elements, projects into the course of the yearn and is acted upon by the yarn,
   **characterised in that** the stationary yarn guide elements (7, 7') each comprise a substantially V-shaped yarn guide groove (20) and the movable measuring unit (21) has a yarn engagement member (8) with a substantially convexly constructed yarn guide contour (12).

2. A device according to Claim 1,
**characterised in that** half the width ($l_x$) of the yarn guide contour (12) is matched to the distance ($l_x$) of the measuring unit (21) from the yarn guide elements (7, 7') and also to the looping angle ($\alpha$) of the yarn (3) on the yarn engagement member (8) of the measuring unit (21).

3. A device according to Claim 2,
**characterised in that** half the width ($l_x$) of the yarn feed contour (12) meets the condition: $l_x > l_y \times \tan \alpha/2$.

4. A device according to Claim 1,
**characterised in that** the yarn feed contour (12) has a semi-cylindrical shape in the central region (13), the centre axis (15) of the half cylinder being disposed orthogonally to the course of the yarn (22).

5. A device according to Claim 4,
**characterised in that** the yarn guide contour (12) of the yarn engagement member (8), which is rectilinear in the direction of the X coordinate in the central region, merges on both sides into convexly curved edge regions (14).

6. A device according to one of the preceding Claims,
**characterised in that** the yarn engagement member (8) of the measuring unit (21) comprises a seat (16) open to the rear.

7. A device according to Claim 1,
**characterised in that** the yarn guide elements (7, 7') comprise a yarn guide groove (20) with a rectilinear groove bottom (17) that is straight with respect to the X coordinate.

8. A device according to Claim 7,
**characterised in that** the bottom (17) of the yarn guide groove (20) is convexly curved in the direction of travel of the yarn (F).

9. A device according to Claim 7,
**characterised in that** the yarn guide groove (20) of the yarn guide elements (7, 7') comprises a straight leg (18) and also an angled leg (19).


**Revendications**

1. Dispositif pour mesurer la force de traction d'un fil en mouvement, comprenant deux éléments guide-fil fixes et un organe de mesure sollicité par le fil, qui est placé entre les éléments guide-fil et qui fait saillie dans la trajectoire du fil, **caractérisé en ce que** les éléments guide-fil fixes (7, 7') présentent chacun une rainure guide-fil (20) essentiellement en forme de V, et l'organe de mesure (21) mobile possède un corps (8) sollicitant le fil, dont le contour (12) guidant le fil est essentiellement convexe.

2. Dispositif selon la revendication 1, **caractérisé en ce que** la demi-largeur ($1_x$) du contour (12) guidant le fil est coordonnée avec l'écart ($l_y$) entre l'organe de mesure (21) et les éléments guide-fil (7, 7') et avec l'angle d'enroulement ($\alpha$) du fil (3) sur le corps (8) sollicitant le fil de l'organe de mesure (21).

3. Dispositif selon la revendication 2, **caractérisé en ce que** la demi-largeur ($l_x$) du contour (12) guidant le fil remplit la condition $l_x > l_y \times \tan \alpha/2$.

4. Dispositif selon la revendication 1, **caractérisé en ce que** le contour (12) guidant le fil présente dans la zone médiane (13) une forme semi-cylindrique, l'axe médian (15) du demi-cylindre étant disposé perpendiculairement à la trajectoire (22) du fil.

5. Dispositif selon la revendication 4, **caractérisé en ce que** le contour (12) guidant le fil du corps 8 qui est rectiligne dans la zone médiane (13) dans la direction de l'axe des abscisses se transforme de part et d'autre en des zones périphériques convexes (14).

6. Dispositif selon l'une des revendications précédentes, **caractérisé en ce que** le corps (8) sollicitant le fil de l'organe de mesure (21) présente un logement (16) ouvert vers l'arrière.

**7.** Dispositif selon la revendication 1, **caractérisé en ce que** les éléments guide-fil (7, 7') présentent une rainure guide-fil (20) dont le fond (17) est rectiligne par rapport à l'axe des abscisses.

**8.** Dispositif selon la revendication 7, **caractérisé en ce que** le fond (17) de la rainure guide-fil (20) est convexe dans la direction de circulation du fil (F).

**9.** Dispositif selon la revendication 7, **caractérisé en ce que** la rainure guide-fil (20) des éléments guide-fil (7, 7') présente une aile rectiligne (18) et une aile coudée (19).

FIG.1

FIG.2

FIG.3

FIG.4

FIG.5

FIG.6

FIG.7

FIG.8

FIG.9

9